# EUROPÄISCHE PATENTSCHRIFT

(11) **EP 3 538 873 B1**
(45) Veröffentlichungstag und Bekanntmachung des Hinweises auf die Patenterteilung: **08.06.2022**
(21) Anmeldenummer: 17804109.1
(22) Anmeldetag: 09.11.2017
(51) Int. Cl.: G01N 21/35, G01J 3/02, G01J 3/44, G01N 21/359, G01N 21/39, G01N 21/65, G01J 3/10, G01J 3/42

(54) **DETEKTIONSVERFAHREN FÜR CHEMISCHE STOFFE, DETEKTIONSVORRICHTUNG, DURCHGANGSVORRICHTUNG**
DETECTION METHOD FOR CHEMICAL SUBSTANCES, DETECTION APPARATUS, FEED-THROUGH APPARATUS
PROCÉDÉ DE DÉTECTION DE SUBSTANCES CHIMIQUES, DISPOSITIF DE DÉTECTION ET DISPOSITIF DE PASSAGE

(30) Priorität: 10.11.2016 DE 102016121517
(43) Veröffentlichungstag der Anmeldung: 18.09.2019
(73) Patentinhaber: Deutsches Zentrum für Luft- und Raumfahrt e.V., 51147 Köln (DE)
(72) Erfinder: SPEISER, Jochen, 70180 Stuttgart (DE); DUSCHEK, Frank, 97953 Königheim (DE); FREJ, Julia, 79650 Schopfheim (DE)
(74) Vertreter: Hoeger, Stellrecht & Partner Patentanwälte mbB
(86) Internationale Anmeldenummer: PCT/EP2017/078780
(87) Internationale Veröffentlichungsnummer: WO 2018/087237

(56) Entgegenhaltungen:
- US-A1- 2005 280 814
- US-A1- 2011 261 351
- US-A1- 2013 034 266
- US-A1- 2013 076 913
- US-A1- 2013 214 164
- US-A1- 2014 240 511
- US-A1- 2016 202 122
- US-B1- 6 967 612

## Beschreibung

Die Erfindung betrifft ein Detektionsverfahren für chemische Stoffe auf beweglichen Objekten.

Ferner betrifft die Erfindung eine Detektionsvorrichtung.

Ferner betrifft die Erfindung eine Durchgangsvorrichtung.

Aus der DE 198 42 197 A1 ist ein Fernmesssystem zur Ermittlung diffuser gasförmiger Schadstoffe mit Laserdioden und Detektor bekannt. Bei dem Fernmesssystem sind an einem Kyrostaten eine oder mehrere Laserdioden und der Detektor angebracht, wobei korrespondierend zu den Laserdioden ein die emittierte Strahlung parallelisierender, um 90° umlenkender Off-Axis-Paraboloid-Spiegel und zwischen der Messstrecke ein Planspiegel und ein Retroreflektor und korrespondierend zum Detektor ein Off-Axis-Paraboloid-Spiegel und ein Planspiegel angeordnet sind.

Aus der DE 695 09 662 T2 sind ein Verfahren und eine Vorrichtung zum Detektieren eines Sprengstoffmaterials in einer Probe bekannt. Das Verfahren umfasst das Beleuchten der Probe mit einer Lichtquelle, um die Erzeugung von Raman-gestreutem Licht zu bewirken, und das Detektieren des Raman-gestreuten Lichtes.

Aus der DE 10 2013 103 954 A1 sind ein Verfahren und eine Vorrichtung zur Identifizierung von schwer flüchtigen Substanzen, insbesondere von Gefahrstoffen, die in einer Gasphase vorliegen, bekannt.

Aus der US 2007/0210254 A1 ist ein optisches und auf "Laser differential absorption remote detection" basiertes Verfahren zur Detektion explosiver Substanzen bekannt.

Aus der DE 195 28 960 A1 sind ein Verfahren und eine Vorrichtung zur Fernmessung von Luftschadstoffen und Spurengasen, insbesondere toxischen, speziell von Brand- und Katastrophenfällen bekannt. Bei dem Verfahren erfolgt eine Messung mit mindestens einer Wellenlänge, die vom Schadstoff absorbiert wird, und mindestens einer weiteren Wellenlänge, die vom Schadstoff nicht absorbiert wird.

Aus der DE 196 13 805 C1 sind ein Verfahren und eine Vorrichtung zur Fernerkundung von Spurengasen unter Verwendung des DIAL-Verfahrens bekannt.

Aus der DE 10 2005 059 500 B3 sind eine Ferndetektionsvorrichtung und ein Ferndetektionsverfahren bekannt. Die Ferndetektionsvorrichtung umfasst eine Licht-Sendeeinrichtung mit einem optischen parametrischen Oszillator, eine Detektionseinrichtung zur Detektion von rückgestreutem Licht, und eine Auswerteeinrichtung.

Aus der DE 10 2005 049 508 A1 sind eine Vorrichtung und ein Verfahren zur Detektion von Schadstoffen, insbesondere chemischen oder biologischen Schadstoffen, bekannt. Die Vorrichtung umfasst mindestens eine Lichtquelle, mindestens einen Probenraum, in den eine zu untersuchende Probe eingeführt und in dem die Probe mittels der Lichtquelle bestrahlt wird, mindestens einen Detektor zur Detektion von der Probe emittierter Strahlung, und mindestens eine Detektionselektronik zum Bereitstellen eines Detektorsignals.

Aus der WO 2007/011391 A2 sind ein Verfahren und eine Vorrichtung zur Detektion explosiver Substanzen an Menschen bekannt.

Aus der DE 10 2014 000 362 A1 sind eine Vorrichtung und ein Verfahren zur Kompensierung von Bewegungen eines Patienten bei MRT-Messungen in Echtzeit bekannt.

Aus der WO 2007/136745 A2 ist eine Vorrichtung zur optischen Verfolgung einer Bewegung in Echtzeit bekannt.

Aus der US 7,116,415 B2 ist eine Vorrichtung zur Überprüfung eines Zielobjekts auf chemische oder biologische Waffen bekannt, umfassend eine Laserstrahlquelle, welche zwei übereinstimmende Laserstrahlen erzeugt, ein Laserablenkungssystem, welches zumindest einen der zwei Laserstrahlen auf das Zielobjekt richtet, einen Kollektor, welcher einen Anteil des Laserstrahls empfängt, der am Zielobjekt gestreut wurde, und eine Auswertungseinheit, welche die Zusammensetzung der Struktur des Zielobjekts ausgibt.

Aus der US 2013/076913 A1 ist ein Verfahren zur Verfolgung eines beweglichen Objekts in einer Videosequenz bekannt, bei dem eine Videosequenz mit einer Mehrzahl von Einzelbildern von einem Bildaufnahmegerät empfangen wird, mindestens ein Bereich von Interesse in der Videosequenz identifiziert wird, ein Ort des Bereichs von Interesse an einen spektralen Sensor übermittelt wird, mittels des spektralen Sensors ein spektrales Bild des Bereichs von Interesse aufgenommen wird, Pixelwerte in dem aufgenommenen spektralen Bild analysiert werden, um ein Material, welches von zumindest einem Objekt in dem Bereich von Interesse umfasst ist, zu identifizieren, und bei dem ein Ort des genannten Objekts dem Bildaufnahmegerät zur Verfügung gestellt wird und das Bildaufnahmegerät das genannte Objekt verfolgt.

Aus der WO 2007/011391 A2 ist eine Vorrichtung zur Detektion von am Menschen getragenen Sprengstoffen innerhalb eines Überwachungsbereichs bekannt, umfassend ein aktives Radarsystem, ein Kontrollsystem zur Radarverfolgung, welches physisch mit dem aktiven Radarsystem zusammenarbeitet, eine Benutzerschnittstelle, umfassend eine Bildausgabe und Mittel zur Dateneingabe, und einen Computer, welcher in elektrischer Kommunikation mit dem Radarsystem, dem Kontrollsystem zur Radarverfolgung und der Benutzerschnittstelle steht, wobei der Computer einen Programmcode umfasst, welcher Befehle zur Zielsetzung des Radarsystems und zur Detektion von am Menschen getragenen Sprengstoffeinrichtungen aufweist.

Aus der US 2005/280814 A1 ist eine Vorrichtung zur Untersuchung von Bestandteilen von Waffen oder biologischen Waffenkomponenten bekannt, umfassend eine Laserstrahlquelle zur Erzeugung eines Laserstrahls, ein Laserablenksystem, das den Laserstrahl auf ein Ziel richtet, einen Kollektor, der einen Teil des von dem Ziel gestreuten Lasterstrahls empfängt, und eine Auswerteeinrichtung.

Aus der US 2014/240511 A1 ist ein Verfahren zum Fokussieren einer Videokamera auf ein Objekt von Interesse bekannt.

Der Erfindung liegt die Aufgabe zugrunde, ein Detektionsverfahren der eingangs genannten Art bereitzustellen, welches einfach und zeiteffizient durchführbar ist.

Diese Aufgabe wird durch das Detektionsverfahren gemäß dem beigefügten Anspruchssatz gelöst.

Das Detektionsverfahren ermöglicht die Detektion chemischer Stoffe, welche sich auf der Oberfläche des beweglichen Objekts befinden. Ein chemischer Stoff ist hierbei ein Reinstoff, welcher aus einem chemischen Element oder einer chemischen Verbindung besteht, oder ein Gemisch von chemischen Elementen und/oder chemischen Verbindungen. Dies ermöglicht beispielsweise die Detektion von chemischen, biologischen oder explosiven Gefahrstoffen, wie zum Beispiel die Detektion von Sprengstoff.

Das Detektionsverfahren wird an einem beweglichen Objekt innerhalb des Kontrollbereichs durchgeführt. Das bewegliche Objekt ist beispielsweise eine gehende menschliche Person. Das Detektionsverfahren kann an der Person durchgeführt werden, ohne dass ein Eingriff an der Person durchgeführt werden muss oder die Person eine bestimmte Handlung vornehmen muss.

Durch die Verfolgung der Position des Erfassungsbereichs des beweglichen Objekts wird eine spektroskopische Untersuchung des beweglichen Objekts ermöglicht, falls sich dieses während des Untersuchungszeitraums bewegt. Dies ermöglicht eine unkompliziertere spektroskopische Untersuchung des beweglichen Objekts mit höherer Nachweisgenauigkeit.

Das Detektionsverfahren kann beispielsweise an Bahnhöfen oder Flughäfen zur automatisierten Sicherheitskontrolle von Personen eingesetzt werden. Zur Durchführung des Detektionsverfahrens muss eine zu kontrollierende Person lediglich einen Kontrollbereich passieren. Die Person kann hierbei in Bewegung bleiben. Dies ermöglicht eine zeiteffiziente Durchführung des Detektionsverfahrens. Dadurch können beispielsweise Wartezeiten bei Sicherheitskontrollen verringert werden.

Der Erfassungsbereich des beweglichen Objekts wird beleuchtet.

Insbesondere wird auf dem Erfassungsbereich ein vorgegebenes Beleuchtungsmuster erzeugt. Dadurch wird die optische Erfassung des Erfassungsbereichs verbessert. Es wird dann die Verfolgung der Position des Erfassungsbereichs innerhalb des Kontrollbereichs verbessert.

Eine räumliche Nachführung erfolgt, angepasst an eine veränderliche Position des Erfassungsbereichs des beweglichen Objekts. Dies ermöglicht eine einfache technische Realisierung des Detektionsverfahrens an einem beweglichen Objekt, dessen Bewegung nicht vorhersehbar ist. Ein solches Objekt ist beispielsweise eine Person, welche sich ungehindert innerhalb des Kontrollbereichs bewegt.

Eine räumliche Nachführung einer zur spektroskopischen Untersuchung des Erfassungsbereichs des beweglichen Objekts verwendeten Spektroskopieeinrichtung oder eines Teils der Spektroskopieeinrichtung bezüglich der Position des beweglichen Objekts erfolgt. Dadurch kann die Durchführung der spektroskopischen Untersuchung an einem bewegten Objekt auf einfache Weise technisch realisiert werden.

Günstig ist es, wenn der vorgegebene Erfassungsbereich ein Beinbereich und/oder ein Fußbereich einer Person ist. Eine Person, welche einen Gefahrstoff mit sich führt, ist häufig mit dem Gefahrstoff im Beinbereich und/oder Fußbereich kontaminiert. Durch die Durchführung des Detektionsverfahrens an dem Beinbereich und/oder Fußbereich wird die Effektivität des Detektionsverfahrens gesteigert.

Insbesondere wird das Detektionsverfahren mit unsichtbarem Licht durchgeführt. Dadurch kann das Detektionsverfahren an einer Person unbemerkt von der Person durchgeführt werden. Hierdurch wird die Effektivität des Detektionsverfahrens weiter gesteigert.

Günstig ist es, wenn der Kontrollbereich durch bauliche Einrichtungen räumlich begrenzt und insbesondere räumlich eingeschlossen ist. Dies ermöglicht eine einfache Realisierung des Detektionsverfahrens. Beispielsweise liegt der Kontrollbereich innerhalb räumlicher Begrenzungen einer Drehtür.

Insbesondere wird eine Vereinzelung von zu untersuchenden beweglichen Objekten innerhalb des Kontrollbereichs und/oder vor Eintritt in den Kontrollbereich durchgeführt. Hierdurch wird sichergestellt, dass sich bei der Durchführung des Detektionsverfahrens nur ein zu untersuchendes bewegliches Objekt innerhalb des Kontrollbereichs befindet. Hierdurch wird eine Fehlalarmrate bei der Durchführung des Detektionsverfahrens weiter verringert.

Insbesondere wird innerhalb des Kontrollbereichs eine Bewegungsgeschwindigkeit des Erfassungsbereichs des beweglichen Objekts durch eine bauliche bewegliche räumliche Begrenzung beeinflusst. Die bewegliche räumliche Begrenzung ist beispielsweise ein Türflügel einer Drehtür, welcher sich mit einer vorgegebenen Geschwindigkeit bewegt. Dadurch passiert beispielsweise eine Person einen innerhalb der Drehtür gelegenen Kontrollbereich mit einer definierten Geschwindigkeit. Dadurch bewegt sich auch ein an der Person gelegener Erfassungsbereich mit einer definierten Bewegungsgeschwindigkeit. Es wird hierdurch die Durchführung des Detektionsverfahrens vereinfacht. Es werden die optische Erfassung und die Verfolgung der Position des Erfassungsbereichs verbessert.

Günstig ist es, wenn eine Bewegungsgeschwindigkeit des Erfassungsbereichs des beweglichen Objekts innerhalb des Kontrollbereichs derart beeinflusst wird, dass die Bewegungsgeschwindigkeit einen vorgegebenen Schwellenwert oder Schwellenwertbereich nicht überschreitet und/oder unterschreitet. Dadurch wird die optische Erfassung und die Verfolgung der Position des Erfassungsbereichs weiter verbessert.

Insbesondere weist der Untersuchungszeitraum eine zeitliche Länge von höchstens 5 s und insbesondere höchstens 2,5 s auf. Dadurch kann das Detektionsverfahren zeiteffizient durchgeführt werden.

Insbesondere wird die Position des Erfassungsbereichs des beweglichen Objekts während des Überwachungszeitraums über eine Bewegungsstrecke von höchstens 0,2 m und insbesondere höchstens 0,1 m verfolgt. Dadurch kann das Detektionsverfahren auf einfache Weise innerhalb eines räumlich begrenzten Bereichs durchgeführt werden.

Insbesondere erfolgt die spektroskopische Untersuchung des Erfassungsbereichs des beweglichen Objekts berührungslos. Dies ermöglicht eine einfache und schnelle Durchführung des Detektionsverfahrens. Dadurch kann das Detektionsverfahren einfach und sicher an einer menschlichen Person durchgeführt werden.

Günstig ist es, wenn ein Abstand zwischen einer Spektroskopieeinrichtung, welche den Erfassungsbereich des beweglichen Objekts spektroskopisch untersucht, und dem Erfassungsbereich mindestens 0,1 m und insbesondere höchstens 2 m beträgt. Dies ermöglicht eine einfache und effiziente Durchführung der spektroskopischen Untersuchung des Erfassungsbereichs des beweglichen Objekts. Es lässt sich dadurch das Detektionsverfahren auf einfache Weise durchführen.

Insbesondere wird die optische Erkennung des Erfassungsbereichs und/oder die Verfolgung der Position des Erfassungsbereichs durch optische Bilderkennung durchgeführt. Dadurch kann die optische Erfassung des Erfassungsbereichs und/oder die Verfolgung der Position des Erfassungsbereichs technisch einfach realisiert werden.

Insbesondere werden mittels der spektroskopischen Untersuchung eine begrenzte Anzahl vorgegebener Gefahrstoffe und insbesondere Sprengstoffe auf der Oberfläche des Erfassungsbereichs des beweglichen Objekts erkannt. Dies ermöglicht beispielsweise den Einsatz des Detektionsverfahrens zur Durchführung von Sicherheitskontrollen an Personen. Dadurch können Gefahrstoffe und insbesondere Sprengstoffe an Personen auf einfache Weise erkannt werden.

Zur spektroskopischen Untersuchung des Erfassungsbereichs wird ein laserspektroskopisches Verfahren eingesetzt. Hierdurch wird eine höhere Nachweisgenauigkeit bei einer geringen Fehlalarmrate erreicht.

Beispielsweise wird zur spektroskopischen Untersuchung des Erfassungsbereichs Infrarot-Spektroskopie und/oder Raman-Spektroskopie und/oder Differential Absorption Light Detection and Ranging und/oder laserinduzierte Fluoreszenzspektroskopie und/oder zeitaufgelöste laserinduzierte Fluoreszenzspektroskopie eingesetzt. Dies ermöglicht eine einfache technische Realisierung des Detektionsverfahrens. Hierdurch wird eine höhere Nachweisgenauigkeit bei einer geringen Fehlalarmrate erreicht.

Die obige Aufgabe wird auch durch eine Detektionsvorrichtung und eine Durchgangsvorrichtung gemäß dem beigefügten Anspruchssatz gelöst.

Die erfindungsgemäße Detektionsvorrichtung weist die bereits im Zusammenhang mit dem erfindungsgemäßen Detektionsverfahren erläuterten Vorteile auf.

Weitere vorteilhafte Ausgestaltungen der erfindungsgemäßen Detektionsvorrichtung wurden ebenfalls bereits im Zusammenhang mit dem erfindungsgemäßen Detektionsverfahren erläutert.

Insbesondere ist mit der Detektionsvorrichtung das Detektionsverfahren durchführbar oder wird auf dieser durchgeführt.

Insbesondere ist die Spektroskopieeinrichtung mittels der Nachführungseinrichtung um eine horizontale Drehachse und/oder um eine vertikale Drehachse drehbar. Dadurch wird die optische Verfolgung der Position des Erfassungsbereichs durch die Spektroskopieeinrichtung auf einfache Weise realisiert.

Insbesondere ist mittels der Nachführungseinrichtung mindestens eine Kamera der optischen Erfassungseinrichtung um eine horizontale Drehachse und/oder um eine vertikale Drehachse drehbar. Es wird dadurch die optische Erfassung des vorgegebenen Erfassungsbereichs des zu untersuchenden beweglichen Objekts innerhalb des Kontrollbereichs weiter verbessert.

Die optische Erfassungseinrichtung übermittelt die Position des Erfassungsbereichs des beweglichen Objekts an die Nachführungseinrichtung.

Es lässt sich dadurch die optische Verfolgung der Position des Erfassungsbereichs des beweglichen Objekts durch die Spektroskopieeinrichtung auf technisch einfache Weise realisieren.

Die Spektroskopieeinrichtung umfasst mindestens einen Laser. Dies ermöglicht eine einfache technische Realisierung der Spektroskopieeinrichtung und eine einfache Durchführung von zur spektroskopischen Untersuchung verwendeten spektroskopischen Verfahren.

Erfindungsgemäß ist bei der eingangs genannten Durchgangsvorrichtung vorgesehen, dass die Durchgangsvorrichtung einen Eintrittsbereich, einen Austrittsbereich und eine erfindungsgemäße Detektionsvorrichtung umfasst, und dass an der Durchgangsvorrichtung das vorstehend beschriebene Detektionsverfahren mit der Detektionsvorrichtung durchgeführt wird.

Insbesondere wird durch die Detektionsvorrichtung ein Kontrollbereich zwischen einem Bodenbereich der Durchgangsvorrichtung und einem Bereich in einer Höhe von höchstens 1 m über dem Bodenbereich überwacht. Hierdurch wird beispielsweise eine einfache Überwachung eines Bein- und/oder Fußbereichs einer Person, welche die Durchgangsvorrichtung passiert, ermöglicht. Günstig ist es, wenn der Kontrollbereich an dem Eintrittsbereich und/oder an dem Austrittsbereich angeordnet ist. Auf diese Weise kann das Detektionsverfahren einfach und schnell an Personen durchgeführt werden, welche die Durchgangsvorrichtung passieren.

Insbesondere ist die Durchgangsvorrichtung eine Drehtür oder eine Rolltreppe oder umfasst eine Drehtür oder eine Rolltreppe. Dies ermöglicht eine einfache Durchführung des Detektionsverfahrens.

Insbesondere umfasst die Durchgangsvorrichtung eine Eintrittstür, durch welche eine Vereinzelung von zu untersuchenden Personen durchgeführt wird. Die Eintrittstür ist beispielsweise eine automatische Schiebetür. Es lässt sich dadurch die Vereinzelung der zu untersuchenden Personen auf technisch einfache Weise realisieren.

Beispielsweise ist die Durchgangsvorrichtung derart dimensioniert, dass sie nur von einer Person gleichzeitig betreten werden kann.

Die nachfolgende Beschreibung bevorzugter Ausführungsformen dient im Zusammenhang mit den Zeichnungen der näheren Erläuterung der Erfindung.

Es zeigen:
- Figur 1: eine schematische Darstellung eines Ausführungsbeispiels einer Detektionsvorrichtung;
- Figur 2: eine Ansicht eines Teilbereichs der Detektionsvorrichtung gemäß Figur 1;
- Figur 3: eine schematische Darstellung eines weiteren Ausführungs-beispiels einer Detektionsvorrichtung;
- Figur 4: eine Schnittansicht eines weiteren Ausführungsbeispiels einer Detektionsvorrichtung an einer Drehtür; und
- Figur 5: eine Schnittansicht eines weiteren Ausführungsbeispiels einer Detektionsvorrichtung an einer Rolltreppe.

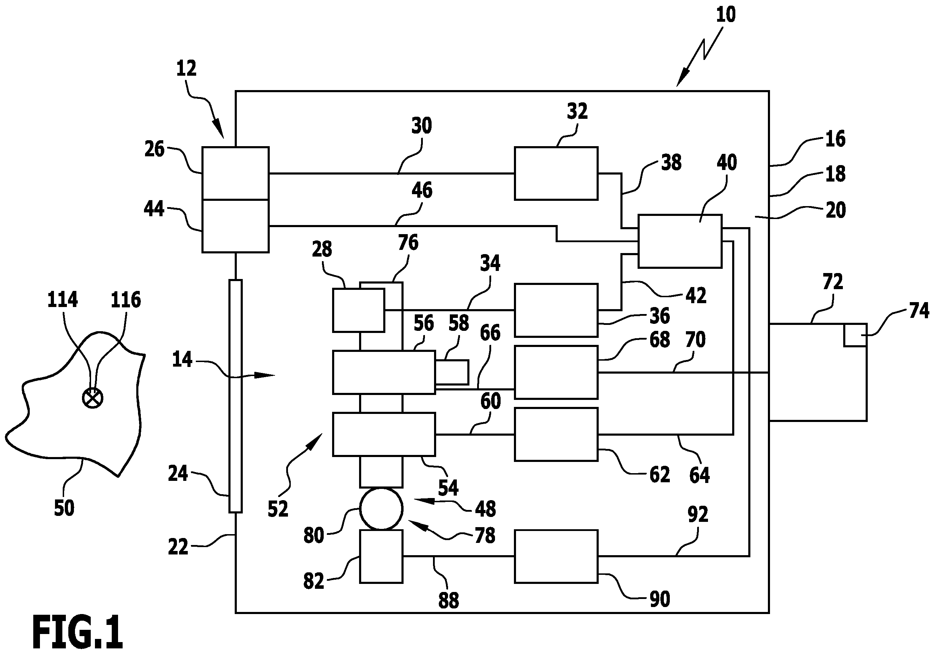

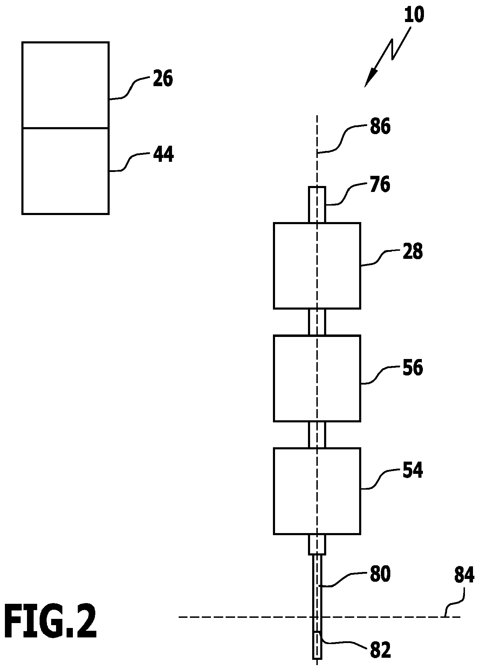

Ein Ausführungsbeispiel einer Detektionsvorrichtung für chemische Stoffe, welche in Figur 1 und Figur 2 gezeigt ist und dort mit 10 bezeichnet ist, umfasst eine optische Erfassungseinrichtung 12 und eine Untersuchungseinrichtung 14.

Die Detektionsvorrichtung 10 umfasst ein Gehäuse 16 mit einer Wandung 18. Innerhalb des Gehäuses 16 ist ein durch die Wandung 18 begrenzter Innenraum 20 gebildet.

Die Wandung 18 weist an einer Frontseite 22 des Gehäuses 16 ein Wandungselement 24 auf, welches aus einem optisch durchlässigen Material besteht. Das Wandungselement 24 ist beispielsweise eine Glasplatte.

Komponenten der optischen Erfassungseinrichtung 12 und der Untersuchungseinrichtung 14 sind in dem Innenraum 20 und/oder an der Wandung 18 des Gehäuses 16 angeordnet.

Die optische Erfassungseinrichtung 12 umfasst eine erste Kamera 26 und eine zweite Kamera 28. Die erste Kamera 26 ist über eine Leitung 30 signalwirksam mit einer ersten Datenerfassungseinrichtung 32 verbunden. Die zweite Kamera 28 ist über eine Leitung 34 signalwirksam mit einer zweiten Datenerfassungseinrichtung 36 verbunden.

Die erste Datenerfassungseinrichtung 32 ist über eine Leitung 38 signalwirksam mit einer optischen Datenauswertungseinrichtung 40 verbunden. Die zweite Datenerfassungseinrichtung 36 ist über eine Leitung 42 ebenfalls signalwirksam mit der optischen Datenauswertungseinrichtung 40 verbunden.

Die erste Kamera 26, die zweite Kamera 28, die erste Datenerfassungseinrichtung 32, die zweite Datenerfassungseinrichtung 36 und die optische Datenauswertungseinrichtung 40 sind Komponenten der optischen Erfassungseinrichtung 12.

Die optische Erfassungseinrichtung 12 umfasst eine Beleuchtungseinrichtung 44, welche über eine Leitung 46 signalwirksam mit der Datenauswertungseinrichtung 40 verbunden ist.

Die erste Kamera 26 ist an der Frontseite 22 des Gehäuses 16 positioniert. Die erste Kamera 26 ist beispielsweise an der Wandung 18 des Gehäuses 16 angeordnet.

Die Beleuchtungseinrichtung 44 ist ebenfalls an der Frontseite 22 des Gehäuses 16 positioniert. Die Beleuchtungseinrichtung 44 ist beispielsweise an der Wandung 18 des Gehäuses 16 angeordnet.

Die zweite Kamera 28 ist in dem Innenraum 20 des Gehäuses 16 positioniert. Die zweite Kamera 28 ist dort an einer Nachführungseinrichtung 48 der Untersuchungseinrichtung 14 angeordnet. Die Nachführungseinrichtung 48 wird weiter unten im Detail beschrieben.

Die erste Kamera 26 und die zweite Kamera 28 sind derart angeordnet, dass sie einen Kontrollbereich 50 optisch erfassen. Der Kontrollbereich 50 liegt außerhalb des Gehäuses 16. Er ist der Frontseite 22 des Gehäuses 16 zugewandt.

Die zweite Kamera 28 ist dem optisch durchlässigen Wandungselement 24 des Gehäuses 16 zugewandt. Auf diese Weise wird durch die zweite Kamera 28 der Kontrollbereich 50 aus dem Innenraum 20 heraus optisch erfasst.

Die Untersuchungseinrichtung 14 umfasst eine Spektroskopieeinrichtung 52. Die Spektroskopieeinrichtung 52 weist eine Sendeeinrichtung 54 und eine Empfangseinrichtung 56 auf. Die Empfangseinrichtung 56 umfasst ein Spektrometer 58.

Die Sendeeinrichtung 54 sendet elektromagnetische Strahlung aus. Die Sendeeinrichtung 54 ist ein Laser.

Die Empfangseinrichtung 56 empfängt elektromagnetische Strahlung. Die empfangende elektromagnetische Strahlung wird durch das Spektrometer 58 spektroskopisch untersucht. Die Empfangseinrichtung 56 umfasst beispielsweise ein optisches Teleskop.

Die Sendeeinrichtung 54 und die Empfangseinrichtung 56 sind an der Nachführungseinrichtung 58 in dem Innenraum 20 des Gehäuses 16 angeordnet. Sie sind dem Wandungselement 24 des Gehäuses 16 zugewandt. Das Wandungselement 24 ist durchlässig für die elektromagnetische Strahlung, welche entsprechend des eingesetzten Spektroskopieverfahrens von der Sendeeinrichtung 54 ausgesendet wird und von der Empfangseinrichtung 56 empfangen wird.

Durch die Spektroskopieeinrichtung 52 wird mit der Sendeeinrichtung 54 elektromagnetische Strahlung an den Kontrollbereich 50 ausgesendet. Die ausgesendete elektromagnetische Strahlung wird, je nach eingesetztem Spektroskopieverfahren, beispielsweise an einem Objekt innerhalb des Kontrollbereichs 50 reflektiert und/oder gestreut. Die reflektierte und/oder gestreute elektromagnetische Strahlung wird von der Empfangseinrichtung 56 empfangen und mit dem Spektrometer 58 spektroskopisch untersucht.

Die Sendeeinrichtung 54 ist über eine Leitung 60 signalwirksam mit einer Steuereinrichtung 62 verbunden. Die Steuereinrichtung 62 empfängt Steuersignale von der optischen Datenauswertungseinrichtung 60. Diese ist hierzu mit einer Leitung 64 signalwirksam mit der Steuereinrichtung 62 verbunden.

Die Empfangseinrichtung 56 ist über eine Leitung 66 mit einer Datenerfassungseinrichtung 68 signalwirksam verbunden. Die Datenerfassungseinrichtung 68 erfasst die von der Empfangseinrichtung 56 empfangenen Daten. Die Datenerfassungseinrichtung 68 ist über die Empfangseinrichtung 56 signalwirksam mit dem Spektrometer 58 verbunden. Auf diese Weise empfängt die Datenerfassungseinrichtung 68 durch das Spektrometer 58 erfasste Daten. Die Datenerfassungseinrichtung 68 übermittelt ferner Steuersignale an das Spektrometer 58.

Die Sendeeinrichtung 54, die Empfangseinrichtung 56, die Steuereinrichtung 62 und die Datenerfassungseinrichtung 68 sind Komponenten der Spektroskopieeinrichtung 52.

Die Datenerfassungseinrichtung 68 ist über eine Leitung 70 signalwirksam mit einer Auswertungseinrichtung 72 verbunden. Die Auswertungseinrichtung 72 ist beispielsweise an der Wandung 18 an einer Außenseite des Gehäuses 16 angeordnet. Die Auswertungseinrichtung 72 umfasst eine Benutzerschnittstelle 74.

Die Auswertungseinrichtung 72 wertet die durch die Spektroskopieeinrichtung 52 erfassten Daten aus. Über die Benutzerschnittstelle 74 können beispielsweise Ergebnisse der Datenauswertung ausgegeben werden.

Die Nachführungseinrichtung 48 der Untersuchungseinrichtung 14 ist in dem Innenraum 20 des Gehäuses 16 angeordnet. Die Nachführungseinrichtung 48 umfasst eine Halteeinrichtung 76. Die Halteeinrichtung 76 ist beispielsweise zylinderförmig ausgebildet. An der Halteeinrichtung 76 sind die zweite Kamera 28, die Sendeeinrichtung 54 und die Empfangseinrichtung 56 angeordnet.

Die Nachführungseinrichtung 48 weist eine Dreheinrichtung 78 auf, welche mit der Halteeinrichtung 76 verbunden ist. Die Dreheinrichtung 78 ist beispielsweise an einem unteren Ende der Halteeinrichtung 76 angeordnet.

Die Dreheinrichtung 78 weist ein horizontales Drehelement 80 und ein vertikales Drehelement 82 auf.

Durch das horizontale Drehelement 80 kann eine Drehung der Halteeinrichtung 76 um eine horizontale Drehachse 84 bewirkt werden (siehe Figur 2). Durch das vertikale Drehelement 82 kann eine Drehung der Halteeinrichtung 76 um eine vertikale Drehachse 86 bewirkt werden.

Die Dreheinrichtung 78 ist über eine Leitung 88 signalwirksam mit einer Steuereinrichtung 90 verbunden.

Die Steuereinrichtung 90 empfängt Steuersignale von der optischen Datenauswertungseinrichtung 40. Die optische Datenauswertungseinrichtung 40 ist hierzu über eine Leitung 92 signalwirksam mit der Steuereinrichtung 90 verbunden.

Die Nachführungseinrichtung 48 ermöglicht eine Drehung der Sendeeinrichtung 54 und der Empfangseinrichtung 56 um die horizontale Drehachse 84 und die vertikale Drehachse 86. Dies ermöglicht eine (räumliche) optische Verfolgung eines Objekts innerhalb des Kontrollbereichs 50 durch die Spektroskopieeinrichtung 52. Dies wird weiter unten näher erläutert.

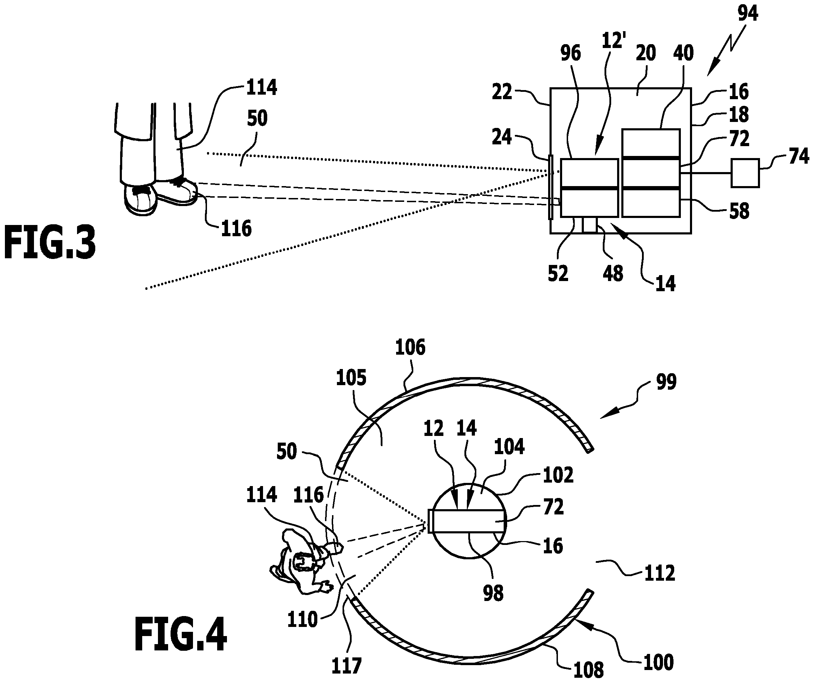

Bei dem nachfolgend beschriebenen Ausführungsbeispiel einer Detektionsvorrichtung, welche in Figur 3 schematisch gezeigt und dort mit 94 bezeichnet ist, sind jene Komponenten, welche mit Komponenten der Detektionsvorrichtung 10 des vorstehend beschriebenen Ausführungsbeispiels identisch sind, mit den gleichen Bezugszeichen belegt. Was diese Komponenten betrifft, so gilt die Beschreibung des vorstehenden Ausführungsbeispiels auch für das nachfolgend beschriebene Ausführungsbeispiel.

Die Detektionsvorrichtung 94 ist grundsätzlich gleich aufgebaut wie die Detektionsvorrichtung 10 des vorstehend beschriebenen Ausführungsbeispiels. Die Detektionsvorrichtung 94 weist eine modifizierte optische Erfassungseinrichtung 12' auf.

Die optische Erfassungseinrichtung 12' ist grundsätzlich gleich aufgebaut wie die optische Erfassungseinrichtung 12. Die optische Erfassungseinrichtung 12' umfasst (beispielsweise alternativ zu der zweiten Kamera 28) eine Stereokamera 96. Mittels der Stereokamera 96 wird der Kontrollbereich 50 dreidimensional optisch erfasst.

Bei der Detektionsvorrichtung 94 ist es vorgesehen, dass sämtliche Komponenten der optischen Erfassungseinrichtung 12' und der Untersuchungseinrichtung 14 in dem Innenraum 20 des Gehäuses 16 angeordnet sind.

Bei einer Ausführungsform der Detektionsvorrichtung 94 ist die Auswertungseinrichtung 72 in dem Innenraum 20 des Gehäuses 16 angeordnet. Es ist dann günstig, wenn die Benutzerschnittstelle 74 außerhalb des Gehäuses 16 angeordnet ist und über eine Leitung signalwirksam mit der Auswertungseinrichtung 72 verbunden ist.

Bei dem in Figur 4 gezeigten Ausführungsbeispiel ist eine Detektionsvorrichtung 98 an einer Durchgangsvorrichtung 99 positioniert. Bei dem gezeigten Ausführungsbeispiel ist die Durchgangsvorrichtung 99 eine Drehtür 100. Figur 4 zeigt dabei eine Schnittansicht von oben auf die Drehtür 100. Die Detektionsvorrichtung 98 ist dabei grundsätzlich gleich ausgebildet wie die Detektionsvorrichtung 10 oder die Detektionsvorrichtung 94 der vorstehend beschriebenen Ausführungsbeispiele.

Die Drehtür 100 weist eine innere Begrenzungswand 102 auf. In einem durch die innere Begrenzungswand 102 begrenzten Innenraum 104 ist die Detektionsvorrichtung 98 mit dem Gehäuse 16 angeordnet. Sie ist dort beispielsweise oberhalb eines Bodenbereichs 105 der Drehtür 100 angeordnet.

Die innere Begrenzungswand 102 wird von einer ersten äußeren Begrenzungswand 106 und einer zweiten äußeren Begrenzungswand 108 der Drehtür 100 umgeben.

Die Drehtür 100 weist einen Eintrittsbereich 110 und einen dem Eintrittsbereich 110 gegenüberliegenden Austrittsbereich 112 auf. Der Eintrittsbereich 110 und der Austrittsbereich 112 sind jeweils zwischen der ersten äußeren Begrenzungswand 106 und der zweiten äußeren Begrenzungswand 108 gebildet.

Der Kontrollbereich 50 der Detektionsvorrichtung 98 liegt an dem Eintrittsbereich 110. Auf diese Weise wird der Eintrittsbereich 110 von der Detektionsvorrichtung 98 überwacht.

Bei einer Ausführungsform umfasst die Drehtür 100 eine Eintrittstür 117, welche an dem Eintrittsbereich 110 angeordnet ist. Die Eintrittstür 117 kann automatisch geöffnet und geschlossen werden. Die Eintrittstür 117 ist beispielsweise eine automatische Schiebetür.

Mit der Eintrittstür 117 kann der Zugang von Personen in den Kontrollbereich 50 der Drehtür 100 gesteuert und/oder geregelt werden.

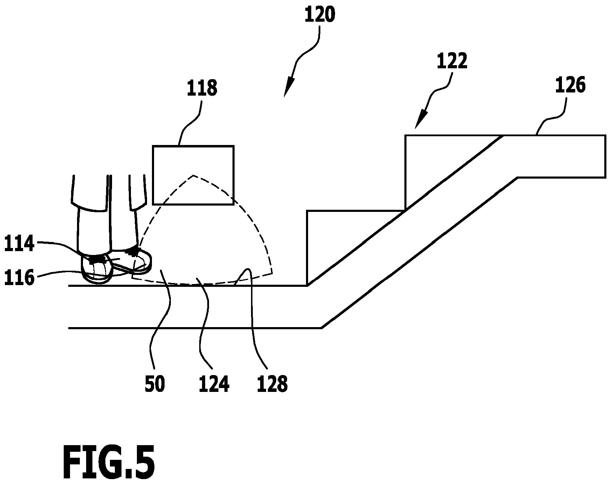

Bei dem in Figur 5 gezeigten Ausführungsbeispiel ist eine Detektionsvorrichtung 118 an einer Durchgangsvorrichtung 120 positioniert. Bei dem gezeigten Ausführungsbeispiel ist die Durchgangsvorrichtung 120 eine Rolltreppe 122. Die Detektionsvorrichtung 118 ist dabei grundsätzlich gleich ausgebildet wie die Detektionsvorrichtung 10 oder 94 der oben beschriebenen Ausführungsbeispiele.

Die Rolltreppe 122 weist einen Eintrittsbereich 124 und einen Austrittsbereich 126 auf.

Der Kontrollbereich 50 der Detektionsvorrichtung 118 liegt beispielsweise an dem Eintrittsbereich 124 der Rolltreppe 122. Die Detektionsvorrichtung 118 ist beispielsweise derart angeordnet, dass durch den Kontrollbereich 50 ein Bereich zwischen einem Bodenbereich 128 der Rolltreppe 122 und einem Bereich in einer Höhe von ca. 1 m über dem Bodenbereich 128 überwacht wird. Auf diese Weise wird der Eintrittsbereich 124 von der Detektionsvorrichtung 118 überwacht.

Ein Detektionsverfahren mit einer vorstehend beschriebenen Detektionsvorrichtung funktioniert wie folgt:

Die Detektionsvorrichtung 10 überwacht mit der optischen Erfassungseinrichtung 12 den Kontrollbereich 50. Der Kontrollbereich 50 wird hierzu von der ersten Kamera 26 und der zweiten Kamera 28 optisch erfasst. Die von der ersten Kamera 26 und der zweiten Kamera 28 erfassten optischen Daten werden von der ersten Datenerfassungseinrichtung 32 und der zweiten Datenerfassungseinrichtung 36 an die optische Datenauswertungseinrichtung 40 übermittelt.

Innerhalb des Kontrollbereichs 40 befindet sich ein Objekt 114. Es ist vorgesehen, dass durch die Detektionsvorrichtung 10 chemische Stoffe detektiert werden, welche sich auf einer Oberfläche des Objekts 114 befinden.

Das Objekt 114 kann ein bewegliches Objekt sein. Es ist beispielsweise eine gehende menschliche Person.

Durch die optische Erfassungseinrichtung 12 wird ein Erfassungsbereich 116 des Objekts 114 optisch erfasst. Der Erfassungsbereich 116 ist beispielsweise ein vorgegebener Beinbereich und/oder Fußbereich des Objekts 114. Der Erfassungsbereich 116 ist beispielsweise ein Abschnitt eines Schuhs einer Person.

Eine Position des Erfassungsbereichs 116 innerhalb des Kontrollbereichs 50 wird durch Datenauswertung mittels der optischen Datenauswertungseinrichtung 40 verfolgt.

Der Erfassungsbereich 116 des Objekts 114 wird durch die optische Datenauswertungseinrichtung 40 beispielsweise durch optische Bilderkennung erfasst und die Position des Erfassungsbereichs 116 verfolgt.

Bei einer Ausführungsform der Detektionsvorrichtung 10 ist es vorgesehen, dass durch die Beleuchtungseinrichtung 44 das Objekt 114 innerhalb des Kontrollbereichs 50 beleuchtet wird. Es kann ferner vorgesehen sein, dass durch die Beleuchtungseinrichtung 44 ein Beleuchtungsmuster auf dem Erfassungsbereich 116 des Objekts 114 erzeugt wird. Dadurch wird die Genauigkeit der Bilderkennung und der optischen Erfassung des Erfassungsbereichs 116 verbessert.

Der Erfassungsbereich 116, welcher sich auf einer Oberfläche des Objekts 114 befindet, wird während eines Untersuchungszeitraums durch die Untersuchungseinrichtung 14 spektroskopisch untersucht. Beispielsweise wird der Untersuchungszeitraum automatisch gestartet, nachdem ein vorgegebener Erfassungsbereich 116 eines Objekts 114 innerhalb des Kontrollbereichs 50 von der optischen Datenauswertungseinrichtung 40 erkannt wurde.

Zur spektroskopischen Untersuchung des Erfassungsbereichs 116 mit der Untersuchungseinrichtung 14 wird über die Sendeeinrichtung 54 auf den Erfassungsbereich 116 elektromagnetische Strahlung ausgesendet. Die elektromagnetische Strahlung wird an dem Erfassungsbereich 116 gestreut und/oder reflektiert. Die von dem Erfassungsbereich 116 gestreute und/oder reflektierte elektromagnetische Strahlung wird von der Empfangseinrichtung 56 empfangen und durch das Spektrometer 58 spektroskopisch analysiert.

Die durch das Spektrometer erfassten Daten werden von der Datenerfassungseinrichtung 68 an die Auswertungseinrichtung 72 übermittelt.

Zur spektroskopischen Untersuchung eines Objekts 114, dessen Erfassungsbereich 116 sich während des Untersuchungszeitraums innerhalb des Kontrollbereichs 50 bewegt, erfolgt mittels der Nachführungseinrichtung 48 eine optische Nachführung der Spektroskopieeinrichtung 52. Dadurch wird realisiert, dass während des Untersuchungszeitraums die von der Sendeeinrichtung 54 ausgesendete elektromagnetische Strahlung stets auf den Erfassungsbereich 116 des beweglichen Objekts 114 gerichtet ist und die Empfangseinrichtung 56 die an dem Erfassungsbereich 116 reflektierte und/oder gestreute elektromagnetische Strahlung empfängt.

Für eine Ausrichtung der Sendeeinrichtung 54 und der Empfangseinrichtung 56 werden von der optischen Datenauswertungseinrichtung 40 Steuersignale an die Steuereinrichtung 90 der Nachführungseinrichtung 48 übermittelt. Die Steuereinrichtung 90 steuert das horizontale Drehelement 80 und das vertikale Drehelement 82.

Auf diese Weise werden die Sendeeinrichtung 54 und die Empfangseinrichtung 56 derart um die horizontale Drehachse 84 und/oder die vertikale Drehachse 86 gedreht, dass sie während des Untersuchungszeitraums auf den Erfassungsbereich 116 des beweglichen Objekts 114 gerichtet sind.

Die Sendeeinrichtung 54 wird während des Untersuchungszeitraums von der optischen Datenauswertungseinrichtung 40 gesteuert und/oder geregelt. Hierzu übermittelt die optische Datenauswertungseinrichtung 40 Steuersignale an die Steuereinrichtung 62, welche die Sendeeinrichtung 54 steuert. Auf diese Weise wird beispielsweise eine Intensität einer elektromagnetischen Strahlung gesteuert und/oder geregelt, welche von der Sendeeinrichtung 54 ausgesendet wird.

Bei einer Ausführungsform der Detektionsvorrichtung 10 ist es vorgesehen, dass die zweite Kamera 28 durch die Nachführungseinrichtung 48 auf den Erfassungsbereich 116 des beweglichen Objekts 114 gerichtet wird. Es wird dadurch die optische Erfassung des Erfassungsbereichs 116 verbessert.

Nach Abschluss der spektroskopischen Untersuchung des Erfassungsbereichs 116 wird der Untersuchungszeitraum beendet. Der Untersuchungszeitraum weist beispielsweise eine Länge von 5 s auf.

Die Auswertungseinrichtung 72 wertet die spektroskopischen Daten aus, welche während des Untersuchungszeitraums von der Spektroskopieeinrichtung 52 aufgenommen wurden. Auf diese Weise werden die chemischen Stoffe detektiert, welche sich auf einer Oberfläche des Erfassungsbereichs 116 des beweglichen Objekts 114 befinden.

Die Ergebnisse der Detektion werden an die Benutzerschnittstelle 74 übermittelt und dort ausgegeben. Sie werden beispielsweise auf einem Bildschirm graphisch dargestellt.

Bei einer Ausführungsform der Detektionsvorrichtung 94 erfolgt die optische Erfassung des Erfassungsbereichs 116 und die Verfolgung seiner Position innerhalb des Kontrollbereichs 50 über eine Stereokamera 96, welche mit der optischen Datenauswertungseinrichtung 40 signalwirksam verbunden ist. Die Position des Erfassungsbereichs 116 innerhalb des Kontrollbereichs 50 kann mit der Stereokamera 96 auf einfache Weise verfolgt werden. Bei dieser Ausführungsform der Detektionsvorrichtung 94 ist eine zusätzliche Beleuchtung des Erfassungsbereichs 116 des Objekts 114 mit einer Beleuchtungseinrichtung 44 nicht erforderlich.

Bei einer Ausführungsform wird durch die Detektionsvorrichtung 98 der Eintrittsbereich 110 der Drehtür 100 überwacht. Das Detektionsverfahren funktioniert ansonsten grundsätzlich wie vorstehend beschrieben.

Mittels der Detektionsvorrichtung 98 können beispielsweise chemische Stoffe auf einer Oberfläche einer Person detektiert werden, welche die Drehtür 100 passiert. Dies ermöglicht es beispielweise, Gefahrstoffe an der Oberfläche von sämtlichen Personen, welche die Drehtür 100 passieren, automatisiert zu erkennen.

Durch bewegliche räumliche Begrenzungen innerhalb der Drehtür 100, welche sich mit einer definierten Geschwindigkeit bewegen, kann eine Bewegungsgeschwindigkeit des Erfassungsbereichs 116 der Person beeinflusst werden. Dies kann beispielsweise durch einen Türflügel der Drehtür 110 erfolgen, welche die Person dazu zwingt, eine bestimmte Bewegungsgeschwindigkeit nicht zu unterschreiten und/oder zu überschreiten.

Mit der Eintrittstür 117 wird bei einer Ausführungsform der Zugang von Personen in den Kontrollbereich 50, welcher innerhalb der Drehtür 100 liegt, geregelt. Beispielsweise wird die Eintrittstür 117 bei Annäherung einer Person an den Eintrittsbereich 110 der Drehtür 100 automatisch geöffnet. Anschließend wird die Eintrittstür 117 nach Durchgang der Person durch den Eintrittsbereich 110 in den Kontrollbereich 50 automatisch geschlossen und erst dann wieder geöffnet, sobald die Person den Kontrollbereich 50 wieder verlassen hat. Auf diese Weise wird eine Vereinzelung von zu untersuchenden Personen durchgeführt. Hierdurch wird sichergestellt, dass das Detektionsverfahren gleichzeitig an nur einer zu untersuchenden Person durchgeführt wird.

Mit der Detektionsvorrichtung 118 wird in analoger Weise der Eintrittsbereich 124 der Rolltreppe 122 überwacht.

Beispielsweise bewegen sich der Bodenbereich 128 oder Stufen der Rolltreppe mit einer definierten Geschwindigkeit. Dadurch wird eine Bewegungsgeschwindigkeit des Erfassungsbereichs 116 des Objekts 114, welches sich auf dem Bodenbereich 128 und/oder den Stufen der Rolltreppe 122 befindet, festgelegt.

Das Detektionsverfahren kann beispielsweise an Bahnhöfen und Flughäfen zur automatisierten Personenkontrolle eingesetzt werden. Mit dem Detektionsverfahren können chemische Stoffe und insbesondere Gefahrstoffe detektiert werden, welche sich beispielsweise auf der Kleidung oder der Haut einer Person befinden. Untersuchungen haben gezeigt, dass eine Person, welche eine größere Menge eines Gefahrstoffs mit sich führt, mit dem Gefahrstoff insbesondere an einem Beinbereich und/oder einem Fußbereich kontaminiert ist. Aus diesem Grund wird als Erfassungsbereich 116 beispielsweise ein Beinbereich und/oder ein Fußbereich der Person gewählt.

Das Detektionsverfahren erfolgt berührungslos. Dadurch kann das Detektionsverfahren einfach und ohne einen direkten Eingriff an der Person durchgeführt werden. Das Detektionsverfahren kann dann derart an der Person durchgeführt werden, dass es von der Person selbst unbemerkt bleibt. Hierzu wird beispielsweise bei der Durchführung der spektroskopischen Untersuchung des Erfassungsbereichs 124 unsichtbares Licht eingesetzt.

Das bei den Detektionsvorrichtungen 10, 94, 98, 118 zur spektroskopischen Untersuchung des Objekts 114 eingesetzte Verfahren ist beispielsweise Infrarot-Absorptionsspektroskopie, Light Detection and Ranging, Differential Absorption Light Detection and Ranging, Raman-Spektroskopie, laserinduzierte Fluoreszenzspektroskopie, oder zeitaufgelöste laserinduzierte Fluoreszenzspektroskopie. In diesem Zusammenhang wird auf die wissenschaftliche Arbeiten "Miniaturized time-resolved Raman spectrometer for planetary sience based on a fast single photon avalanche diode detector array", Applied Optics (2016), "Combining Structured Light and Ladar for Pose Tracking in THz Sensor Management", Proc. of SPIE Vol. 8745 (2013), "Vibrational spectroscopy standoff detection of explosives", Anal Bioanal Chem (2009), "Differential absorption lidar CO2 laser system for remote sensing of TATP related gases", Applied Optics (2009), und "Laser-based standoff detection of explosives: a critical review", Anal Bioanal Chem (2009) verwiesen. Auf diese wissenschaftlichen Arbeiten wird ausdrücklich und vollinhaltlich Bezug genommen.

Der Untersuchungszeitraum des Detektionsverfahrens weist typischerweise eine zeitliche Länge von mehreren Sekunden auf. Der Untersuchungszeitraum weist insbesondere eine zeitliche Länge von höchstens 5 s auf.

Eine Bewegungsstrecke, über welche der Erfassungsbereich 116 des beweglichen Objekts 114 innerhalb des Kontrollbereichs 50 während der Untersuchungszeitraums verfolgt wird, beträgt typischerweise weniger als 1 m. Die Bewegungsstrecke beträgt insbesondere höchstens 0,2 m.

Ein Abstand der Spektroskopieeinrichtung 52 der Detektionsvorrichtung 10, 94, 98, 118 zu dem Erfassungsbereich 116 des Objekts 114 beträgt typischerweise wenige Meter. Der Abstand beträgt insbesondere mindestens 0,1 m und höchstens 2 m.

### Bezugszeichenliste

- 10: Detektionsvorrichtung
- 12: Optische Erfassungseinrichtung
- 12': Optische Erfassungseinrichtung
- 14: Untersuchungseinrichtung
- 16: Gehäuse
- 18: Wandung
- 20: Innenraum
- 22: Frontseite
- 24: Wandungselement
- 26: Erste Kamera
- 28: Zweite Kamera
- 30: Leitung
- 32: Erste Datenerfassungseinrichtung
- 34: Leitung
- 36: Zweite Datenerfassungseinrichtung
- 38: Leitung
- 40: Optische Datenauswertungseinrichtung
- 42: Leitung
- 44: Beleuchtungseinrichtung
- 46: Leitung
- 48: Nachführungseinrichtung
- 50: Kontrollbereich
- 52: Spektroskopieeinrichtung
- 54: Sendeeinrichtung
- 56: Empfangseinrichtung
- 58: Spektrometer
- 60: Leitung
- 62: Steuereinrichtung
- 64: Leitung
- 66: Leitung
- 68: Datenerfassungseinrichtung
- 70: Leitung
- 72: Auswertungseinrichtung
- 74: Benutzerschnittstelle
- 76: Halteeinrichtung
- 78: Dreheinrichtung
- 80: Horizontales Drehelement
- 82: Vertikales Drehelement
- 84: Horizontale Drehachse
- 86: Vertikale Drehachse
- 88: Leitung
- 90: Steuereinrichtung
- 92: Leitung
- 94: Detektionsvorrichtung
- 96: Stereokamera
- 98: Detektionsvorrichtung
- 99: Durchgangsvorrichtung
- 100: Drehtür
- 102: Innere Begrenzungswand
- 104: Innenraum
- 105: Bodenbereich
- 106: Erste äußere Begrenzungswand
- 108: Zweite äußere Begrenzungswand
- 110: Eintrittsbereich
- 112: Austrittsbereich
- 114: Objekt
- 116: Erfassungsbereich
- 117: Eintrittstür
- 118: Detektionsvorrichtung
- 120: Durchgangsvorrichtung
- 122: Rolltreppe
- 124: Eintrittsbereich
- 126: Austrittsbereich
- 128: Bodenbereich

## Patentansprüche

1. Detektionsverfahren für chemische Stoffe auf beweglichen Objekten, bei dem ein zu untersuchendes bewegliches Objekt (114) innerhalb eines definierten räumlichen Kontrollbereichs (50) überwacht wird, ein vorgegebener Erfassungsbereich (116) des beweglichen Objekts (114) optisch erkannt wird, der Erfassungsbereich (116) des beweglichen Objekts (114) spektroskopisch untersucht wird, wobei zur spektroskopischen Untersuchung des Erfassungsbereichs (116) ein unter Verwendung eines Lasers laserspektroskopisches Verfahren eingesetzt wird, bei dem mittels der spektroskopischen Untersuchung chemische Stoffe detektiert werden, welche sich auf einer Oberfläche des Erfassungsbereichs (116) des beweglichen Objekts (114) befinden, wobei die Position des Erfassungsbereichs (116) des beweglichen Objekts (114) innerhalb des Kontrollbereichs (50) durch den Laser räumlich verfolgt wird.

2. Detektionsverfahren nach Anspruch 1, wobei das Verfahren weiter mindestens eines der Folgenden umfasst:
- der Erfassungsbereich (116) des beweglichen Objekts (114) wird beleuchtet, und insbesondere wird ein vorgegebenes Beleuchtungsmuster auf dem Erfassungsbereich (116) erzeugt;
- es erfolgt eine räumliche Nachführung angepasst an eine veränderliche Position des Erfassungsbereichs (116) des beweglichen Objekts (114);
- es erfolgt eine räumliche Nachführung einer zur spektroskopischen Untersuchung des Erfassungsbereichs (116) des beweglichen Objekts (114) verwendeten Spektroskopieeinrichtung (52) oder eines Teils der Spektroskopieeinrichtung (52) bezüglich der Position des beweglichen Objekts (114);
- der vorgegebene Erfassungsbereich (116) ist ein Beinbereich und/oder ein Fußbereich einer Person;
- das Detektionsverfahren wird mit unsichtbarem Licht durchgeführt.

3. Detektionsverfahren nach einem der vorangehenden Ansprüche, **dadurch gekennzeichnet, dass** der Kontrollbereich (50) durch bauliche Einrichtungen räumlich begrenzt und insbesondere räumlich eingeschlossen ist, und/oder dass eine Vereinzelung von zu untersuchenden beweglichen Objekten (114) innerhalb des Kontrollbereichs (50) und/oder vor Eintritt in den Kontrollbereich (50) durchgeführt wird.

4. Detektionsverfahren nach einem der vorangehenden Ansprüche,
**dadurch gekennzeichnet, dass** durch eine bauliche bewegliche räumliche Begrenzung innerhalb des Kontrollbereichs (50) eine Bewegungsgeschwindigkeit des Erfassungsbereichs (116) des beweglichen Objekts (114) beeinflusst wird,
und insbesondere **dadurch gekennzeichnet, dass** innerhalb des Kontrollbereichs (50) eine Bewegungsgeschwindigkeit des Erfassungsbereichs (116) des beweglichen Objekts (114) derart beeinflusst wird, dass die Bewegungsgeschwindigkeit einen vorgegebenen Schwellenwert oder Schwellenwertbereich nicht überschreitet und/oder unterschreitet.

5. Detektionsverfahren nach einem der vorangehenden Ansprüche, **dadurch gekennzeichnet, dass** der Untersuchungszeitraum eine zeitliche Länge von höchstens 5 s und insbesondere höchstens 2,5 s aufweist, und/oder dass die Position des Erfassungsbereichs (116) des beweglichen Objekts (114) während des Überwachungszeitraums über eine Bewegungsstrecke von höchstens 0,2 m und insbesondere höchstens 0,1 m verfolgt wird.

6. Detektionsverfahren nach einem der vorangehenden Ansprüche, **dadurch gekennzeichnet, dass** die spektroskopische Untersuchung des Erfassungsbereichs (116) des beweglichen Objekts (114) berührungslos erfolgt.

7. Detektionsverfahren nach einem der vorangehenden Ansprüche, **dadurch gekennzeichnet, dass** ein Abstand zwischen einer Spektroskopieeinrichtung (52), welche den Erfassungsbereich (116) des beweglichen Objekts (114) spektroskopisch untersucht, und dem Erfassungsbereich (116) mindestens 0,1 m und insbesondere höchstens 2 m beträgt.

8. Detektionsverfahren nach einem der vorangehenden Ansprüche, **dadurch gekennzeichnet, dass** mittels der spektroskopischen Untersuchung eine begrenzte Anzahl vorgegebener Gefahrstoffe und insbesondere Sprengstoffe auf der Oberfläche des Erfassungsbereichs (116) des beweglichen Objekts (114) erkannt werden.

9. Detektionsverfahren nach einem der vorangehenden Ansprüche, **dadurch gekennzeichnet, dass** zur spektroskopischen Untersuchung des Erfassungsbereichs (116) mindestens eines der Folgenden eingesetzt wird:
- Infrarot-Spektroskopie;
- Raman-Spektroskopie;
- Differential Absorption Light Detection and Ranging;
- laserinduzierte Fluoreszenzspektroskopie,
- zeitaufgelöste laserinduzierte Fluoreszenzspektroskopie.

10. Detektionsvorrichtung für chemische Stoffe auf beweglichen Objekten, umfassend eine optische Erfassungseinrichtung (12; 12') und eine Untersuchungseinrichtung (14), wobei die optische Erfassungseinrichtung (12; 12') mindestens eine Kamera (26, 28) aufweist, welche einen vorgegebenen Erfassungsbereich (116) eines zu untersuchenden beweglichen Objekts (114) innerhalb eines definierten räumlichen Kontrollbereichs (50) optisch erkennt, und eine optische Datenauswertungseinrichtung (40) aufweist, die Untersuchungseinrichtung (14) eine Spektroskopieeinrichtung (52) zur spektroskopischen Untersuchung des Erfassungsbereichs (116) umfasst, die Spektroskopieeinrichtung (52) mindestens einen Laser umfasst, die Untersuchungseinrichtung (14) eine Nachführungseinrichtung (48) aufweist, mittels welcher der Laser der Spektroskopieeinrichtung (52) eine Position des Erfassungsbereichs (116) des beweglichen Objekts (114) räumlich verfolgt, wobei die von der Kamera (26, 28) erfassten optische Daten an die Datenauswertungseinrichtung (40) übermittelt werden und die optische Datenauswertungseinrichtung (40) dazu konfiguriert ist, eine Position des Erfassungsbereichs (116) innerhalb des Kontrollbereichs (50) durch Datenauswertung zu verfolgen und diese Position an die Nachführungseinrichtung (48) übermitteln werden, und wobei die Untersuchungseinrichtung (14) eine Auswertungseinrichtung (72) aufweist, welche durch die Spektroskopieeinrichtung (52) aufgenommene Daten auswertet.

11. Detektionsvorrichtung nach Anspruch 10, wobei weiter mindestens eines der folgenden vorgesehen ist:
- die optische Erfassungseinrichtung (12; 12') umfasst eine Beleuchtungseinrichtung (44), welche den Erfassungsbereich (116) des zu untersuchenden Objekts (114) beleuchtet und insbesondere mit einem vorgegebenen Muster beleuchtet;
- die Spektroskopieeinrichtung (52) ist mittels der Nachführungseinrichtung (48) um eine horizontale Drehachse (84) und/oder um eine vertikale Drehachse (86) drehbar.

12. Detektionsvorrichtung nach Anspruch 10 oder 11, **dadurch gekennzeichnet, dass** mittels der Nachführungseinrichtung (48) mindestens eine Kamera (26, 28) der optischen Erfassungseinrichtung (12; 12') um eine horizontale Drehachse (84) und/oder um eine vertikale Drehachse (86) drehbar ist, und/oder dass die optische Erfassungseinrichtung (12; 12') die Position des Erfassungsbereichs (116) des beweglichen Objekts (114) an die Nachführungseinrichtung (48) übermittelt.

13. Durchgangsvorrichtung, umfassend einen Eintrittsbereich (110; 124), einen Austrittsbereich (112; 126) und eine Detektionsvorrichtung gemäß einem der Ansprüche 10 bis 12, **dadurch gekennzeichnet, dass** an der Durchgangsvorrichtung das Detektionsverfahren gemäß einem der Ansprüche 1 bis 9 mit der Detektionsvorrichtung durchgeführt wird.

14. Durchgangsvorrichtung nach Anspruch 13, **dadurch gekennzeichnet, dass** durch die Detektionsvorrichtung (10; 94; 98; 118) ein Kontrollbereich (50) zwischen einem Bodenbereich (105; 128) der Durchgangsvorrichtung und einem Bereich in einer Höhe von höchstens 1 m über dem Bodenbereich (105; 128) überwacht wird,
und insbesondere **dadurch gekennzeichnet, dass** der Kontrollbereich (50) an dem Eintrittsbereich (110; 124) und/oder an dem Austrittsbereich (112; 126) angeordnet ist.

15. Durchgangsvorrichtung nach Anspruch 13 oder 14, **dadurch gekennzeichnet, dass** die Durchgangsvorrichtung eine Drehtür (100) oder eine Rolltreppe (122) ist oder umfasst, und/oder dass die Durchgangsvorrichtung eine Eintrittstür (117) umfasst, durch welche eine Vereinzelung von zu untersuchenden Personen durchgeführt wird.

## Claims

1. A detection method for chemical substances on moving objects, in which method a moving object (114) to be examined is monitored within a defined spatial control region (50), a predefined capture region (116) of the moving object (114) is optically detected, the capture region (116) of the moving object (114) is spectroscopically examined, wherein for the spectroscopic examination of the capture region (116) a laser-spectroscopic method that uses a laser is employed, in which chemical substances which are situated on a surface of the capture region (116) of the moving object (114) are detected by means of the spectroscopic examination, wherein the position of the capture region (116) of the moving object (114) within the control region (50) is tracked spatially by the laser.

2. A detection method according to claim 1, wherein the method further comprises at least one of the following:
- the capture region (116) of the moving object (114) is illuminated, and in particular a predefined illumination pattern is produced in the capture region (116);
- there is performed a spatial tracking adapted to a changing position of the capture region (116) of the moving object (114);
- there is performed a spatial tracking of a spectroscopy device (52), used for spectroscopic examination of the capture region (116) of the moving object (114), or of part of the spectroscopy device (52) in relation to the position of the moving object (114)
- the predefined capture region (116) is a leg region and/or a foot region of a person;
- the detection method is performed using invisible light.

3. A detection method according to one of the preceding claims, **characterised in that** the control region (50) is spatially delimited and in particular is spatially enclosed by structural devices, and/or **in that** moving objects (114) to be examined are separated within the control region (50) and/or prior to entry into the control region (50).

4. A detection method according to one of the preceding claims,
**characterised in that** a movement speed of the capture region (116) of the moving object (114) is influenced by a structural movable spatial delimitation within the control region (50),
and in particular **characterised in that** within the control region (50) a movement speed of the capture region (116) of the moving object (114) is influenced in such a way that the movement speed does not exceed and/or fall below a predefined threshold value or threshold value range.

5. A detection method according to one of the preceding claims, **characterised in that** the examination time period lasts for no more than 5 s and in particular no more than 2.5 s, and/or **in that** the position of the capture region (116) of the moving object (114) is tracked during the monitoring time period over a movement path of no more than 0.2 m, and in particular no more than 0.1 m.

6. A detection method according to one of the preceding claims, **characterised in that** the capture region (116) of the moving object (114) is spectroscopically examined contactlessly.

7. A detection method according to one of the preceding claims, **characterised in that** a spacing between a spectroscopy device (52), which spectroscopically examines the capture region (116) of the moving object (114), and the capture region (116) is no less than 0.1 m and in particular no more than 2 m.

8. A detection method according to one of the preceding claims, **characterised in that** a limited number of predefined hazardous substances and in particular explosives on the surface of the capture region (116) of the moving object (114) are identified by means of the spectroscopic examination.

9. A detection method according to one of the preceding claims, **characterised in that** for the spectroscopic examination of the capture region (116) at least one of the following is employed:
- infrared spectroscopy;
- Raman spectroscopy;
- differential absorption light detection and ranging;
- laser-induced fluorescence spectroscopy;
- time-resolved laser-induced fluorescence spectroscopy.

10. A detection apparatus for chemical substances on moving objects, comprising an optical capture device (12; 12') and an examination device (14), wherein the optical capture device (12; 12') has at least one camera (26, 28), which optically identifies, within a defined spatial control region (50), a predefined capture region (116) of a moving object (114) to be examined, and has an optical data evaluation device (40),
the examination device (14) comprises a spectroscopy device (52) for spectroscopic examination of the capture region (116), the spectroscopy device (52) comprises at least one laser, the examination device (14) has a tracking device (48), by means of which the laser of the spectroscopy device (52) spatially tracks a position of the capture region (116) of the moving object (114), wherein the optical data captured by the camera (26, 28) are transmitted to the data evaluation device (40) and the optical data evaluation device (40) is configured to track a position of the capture region (116) within the control region (50) by data evaluation and to transmit this position to the tracking device (48), and wherein the examination device (14) has an evaluation device (72) which evaluates data recorded by the spectroscopy device (52).

11. A detection apparatus according to claim 10, wherein at least one of the following is also provided:
- the optical capture device (12; 12') comprises an illumination device (44), which illuminates the capture region (116) of the object (114) to be examined and in particular illuminates with a predefined pattern;
- the spectroscopy device (52) is rotatable by means of the tracking device (48) about a horizontal rotation axis (84) and/or about a vertical rotation axis (86).

12. A detection apparatus according to claim 10 or 11, **characterised in that** at least one camera (26, 28) of the optical capture device (12; 12') is rotatable by means of the tracking device (48) about a horizontal rotation axis (84) and/or about a vertical rotation axis (86), and/or **in that** the optical capture device (12; 12') transmits the position of the capture region (116) of the moving object (114) to the tracking device (48).

13. A feed-through apparatus comprising an entry region (110; 124), an exit region (112; 126) and a detection apparatus according to one of claims 10 to 12, **characterised in that** the detection method according to one of claims 1 to 9 is performed at the feed-through apparatus by means of the detection apparatus.

14. The feed-through apparatus according to claim 13, **characterised in that** a control region (50) between a floor region (105; 128) of the feed-through apparatus and a region at a height of no more than 1 m above the floor region (105; 128) is monitored by the detection apparatus (10; 94; 98; 118),
and in particular **characterised in that** the control region (50) is arranged at the entry region (110; 124) and/or at the exit region (112; 126).

15. The feed-through apparatus according to claim 13 or 14, **characterised in that** the feed-through apparatus is or comprises a revolving door (100) or a moving stairway (122), and/or **in that** the feed-through apparatus comprises an entry door (117), by which a separation of people to be examined is performed.

## Revendications

1. Procédé de détection de substances chimiques sur des objets mobiles, dans lequel un objet mobile à analyser (114) est surveillé au sein d'une zone de contrôle dans l'espace définie (50), une zone de collecte prédéfinie (116) de l'objet mobile (114) est reconnue optiquement, la zone de collecte (116) de l'objet mobile (114) est analysée par spectroscopie, dans lequel pour l'analyse spectroscopique de la zone de collecte (116) un procédé de spectroscopie laser est employé en utilisant un laser, dans ledit procédé des substances chimiques sont détectées au moyen de l'analyse spectroscopique, lesquelles substances chimiques se trouvent sur une surface de la zone de collecte (116) de l'objet mobile (114), dans lequel la position de la zone de collecte (116) de l'objet mobile (114) est suivie dans l'espace par le biais du laser au sein de la zone de contrôle (50).

2. Procédé de détection selon la revendication 1, dans lequel le procédé comprend en outre au moins un des suivants :
- la zone de collecte (116) de l'objet mobile (114) est éclairée et en particulier un modèle d'éclairage prédéfini est généré sur la zone de collecte (116) ;
- un suivi dans l'espace adapté à une position variable de la zone de collecte (116) de l'objet mobile (114) est réalisé;
- un suivi dans l'espace d'un dispositif de spectroscopie (52) utilisé pour l'analyse spectroscopique de la zone de collecte (116) de l'objet mobile (114) ou d'une partie du dispositif de spectroscopie (52) en ce qui concerne la position de l'objet mobile (114) est réalisé;
- la zone de collecte prédéfinie (116) est une zone de jambe et/ou une zone de pied d'une personne ;
- le dispositif de détection est mis en œuvre avec la lumière invisible.

3. Procédé de détection selon l'une quelconque des revendications précédentes, **caractérisé en ce que** la zone de contrôle (50) est limitée dans l'espace par le biais de dispositifs de structure et est en particulier enfermée dans l'espace et/ou **en ce qu'**une séparation d'objets mobiles (114) à analyser est mise en œuvre au sein de la zone de contrôle (50) et/ou avant l'entrée dans la zone de contrôle (50).

4. Procédé de détection selon l'une quelconque des revendications précédentes, **caractérisé en ce qu'**une vitesse de mouvement de la zone de collecte (116) de l'objet mobile (114) est influencée par le biais d'une limitation de structure mobile dans l'espace au sein de la zone de contrôle (50),
et en particulier **caractérisé en ce que**, au sein de la zone de contrôle (50), une vitesse de mouvement de la zone de collecte (116) de l'objet mobile (114) est influencée de telle sorte que la vitesse de mouvement ne devient pas supérieure et/ou inférieure à une valeur de seuil ou une plage de valeurs de seuil prédéfinie.

5. Procédé de détection selon l'une quelconque des revendications précédentes, **caractérisé en ce que** la période d'analyse présente une longueur dans le temps d'au plus 5 s et en particulier d'au plus 2,5 s et/ou **en ce que** la position de la zone de collecte (116) de l'objet mobile (114) est suivie pendant la période de surveillance par l'intermédiaire d'une voie de mouvement d'au plus 0,2 m et en particulier d'au plus 0,1 m.

6. Procédé de détection selon l'une quelconque des revendications précédentes, **caractérisé en ce que** l'analyse spectroscopique de la zone de collecte (116) de l'objet mobile (114) s'effectue sans contact.

7. Procédé de détection selon l'une quelconque des revendications précédentes, **caractérisé en ce qu'**un écart entre un dispositif de spectroscopie (52) qui analyse par spectroscopie la zone de collecte (116) de l'objet mobile (114) et la zone de collecte (116) est d'au moins 0,1 m et en particulier d'au plus 2 m.

8. Procédé de détection selon l'une quelconque des revendications précédentes, **caractérisé en ce que**, au moyen de l'analyse par spectroscopie, un nombre limité de substances dangereuses prédéfinies et en particulier des matières explosives sont reconnues sur la surface de la zone de collecte (116) de l'objet mobile (114).

9. Procédé de détection selon l'une quelconque des revendications précédentes, **caractérisé en ce que** pour l'analyse spectroscopique de la zone de collecte (116) au moins l'une des suivantes est employée :
- spectroscopie infrarouge ;
- spectroscopie Raman ;
- LIDAR à absorption différentielle ;
- spectroscopie de fluorescence induite par laser ;
- spectroscopie de fluorescence induite par laser à résolution temporelle.

10. Dispositif de détection de substances chimiques sur des objets mobiles, comprenant un dispositif de collecte optique (12 ; 12') et un dispositif d'analyse (14), dans lequel le dispositif de collecte optique (12 ; 12') présente au moins une caméra (26, 28) qui reconnaît optiquement une zone de collecte prédéfinie (116) d'un objet mobile à analyser (114) au sein d'une zone de contrôle dans l'espace définie (50) et présente un dispositif d'évaluation de données optique (40), le dispositif d'analyse (14) comprend un dispositif de spectroscopie (52) pour l'analyse spectroscopique de la zone de collecte (116), le dispositif de spectroscopie (52) comprend au moins un laser, le dispositif d'analyse (14) présente un dispositif de traçage (48) au moyen duquel le laser du dispositif de spectroscopie (52) suit dans l'espace une position de la zone de collecte (116) de l'objet mobile (114), dans lequel les données optiques collectes par la caméra (26, 28) sont transmises au dispositif d'évaluation de données (40) et le dispositif d'évaluation de données optique (40) est configuré pour suivre une position de la zone de collecte (116) au sein de la zone de contrôle (50) par le biais d'une évaluation de données et transmettre cette position au dispositif de traçage (48), et dans lequel le dispositif d'analyse (14) présente un dispositif d'évaluation (72) qui évalue des données enregistrées par le biais du dispositif de spectroscopie (52).

11. Dispositif de détection selon la revendication 10, dans lequel en outre au moins l'un des suivants est prévu :
- le dispositif de collecte optique (12 ; 12') comprend un dispositif d'éclairage (44) qui éclaire la zone de collecte (116) de l'objet à analyser (114) et éclaire en particulier avec un modèle prédéfini ;
- le dispositif de spectroscopie (52) peut tourner au moyen du dispositif de traçage (48) autour d'un axe de rotation horizontal (84) et/ou autour d'un axe de rotation vertical (86).

12. Dispositif de détection selon la revendication 10 ou 11, **caractérisé en ce que**, au moyen du dispositif de traçage (48) au moins une caméra (26, 28) du dispositif de collecte optique (12 ; 12') peut tourner autour d'un axe de rotation horizontal (84) et/ou autour d'un axe de rotation vertical (86) et/ou **en ce que** le dispositif de collecte optique (12 ; 12') transmet la position de la zone de collecte (116) de l'objet mobile (114) au dispositif de traçage (48).

13. Dispositif de traversée, comprenant une zone d'entrée (110 ; 124), une zone de sortie (112 ; 126) et un dispositif de détection selon l'une quelconque des revendications 10 à 12, **caractérisé en ce que**, au niveau du dispositif de traversée, le procédé de détection selon l'une quelconque des revendications 1 à 9 est mis en œuvre avec le dispositif de détection.

14. Dispositif de traversée selon la revendication 13, **caractérisé en ce que** par le biais du dispositif de détection (10 ; 94 ; 98 ; 118) une zone de contrôle (50) est surveillée entre une zone de fond (105 ; 128) du dispositif de traversée et une zone à une hauteur d'au plus 1 m au-dessus de la zone de fond (105 ; 128),
et en particulier **caractérisé en ce que** la zone de contrôle (50) est disposée au niveau de la zone d'entrée (110 ; 124) et/ou au niveau de la zone de sortie (112 ; 126).

15. Dispositif de traversée selon la revendication 13 ou 14, **caractérisé en ce que** le dispositif de traversée est ou comprend une porte tournante (100) ou un escalier mécanique (122) et/ou **en ce que** le dispositif de traversée comprend une porte d'entrée (117) par le biais de laquelle une séparation de personnes à analyser est mise en œuvre.
